# EUROPEAN PATENT SPECIFICATION

(11) **EP 4 120 037 B1**
(45) Date of publication and mention of the grant of the patent: **21.08.2024**
(21) Application number: 22177876.4
(22) Date of filing: 08.06.2022
(51) Int. Cl.: G05B 23/02

(54) **SCREEN IMAGE GENERATION METHOD, SCREEN IMAGE GENERATION DEVICE AND PROGRAM**
BILDSCHIRM-BILDERZEUGUNGSVERFAHREN, BILDSCHIRM-BILDERZEUGUNGSVORRICHTUNG UND PROGRAMM
PROCÉDÉ DE GÉNÉRATION D'IMAGES D'ÉCRAN, DISPOSITIF DE GÉNÉRATION D'IMAGES D'ÉCRAN ET PROGRAMME

(30) Priority: 16.07.2021 JP 2021118219
(43) Date of publication of application: 18.01.2023
(73) Proprietor: Sintokogio, Ltd., Aichi 450-6424 (JP)
(72) Inventor: AKATSUKA, Narihiro, Nagoya-shi, 4506424 (JP); NAKAMURA, Naohisa, Nagoya-shi, 4506424 (JP); TANAKA, Yoshitsugu, Nagoya-shi, 4506424 (JP)
(74) Representative: Bittner, Thomas L.

(56) References cited:
- JP-A- 2021 068 117
- US-A1- 2020 209 838

## Description

The present invention relates to a screen image generation method and a screen image generation device for generating a management screen image that indicates states of a facility in a production plant. The present invention relates also to a program for causing a computer to operate as the screen image generation device.

### Background

There is a known management system for managing facilities in a production plant. Such a management system includes a sensor installed in the production plant, and gathers information from the facilities and information from the sensor to manage the facilities.

For example, according to a production line monitoring system disclosed in JP 2018-63715, a production line programmable logic controller (PLC), data gathering PLC, and a gateway terminal are installed in a production site, and a server is installed in a remote location. The data gathering PLC acquires production line data outputted from the production line PLC and indicating an operational status of a facility and sensor data which is a value outputted from each of various sensors, and outputs the acquired production line data and sensor data to the gateway terminal. The gateway terminal receives the production line data and the sensor data outputted from the data gathering PLC, and transmits the received data to the server installed in a remote location via a network. The server stores the production line data and the sensor data transmitted from the gateway terminal, and makes these various kinds of data accessible from a client terminal.

Further, according to an operation maintenance and support system disclosed in JP 2004-326468, operation handling equipment, sensor equipment, a power switchboard, and a data logger are installed within plant premises. The data logger gathers an operational state of the operation handling equipment and measurement data of the sensor equipment from a PLC inside the power switchboard. The data logger makes the measurement data accessible from a handheld information terminal of an operational manager via a wireless network. Additionally, the data logger transmits the measurement data to an information terminal device of a professional engineer in a remote location via a network.

A factory automation system is known from JP 2021 068117 A. A production management supporting system is disclosed in US 2020/0209838 A1.

### Summary

In a management system in which a management screen image indicating a state of a facility in a production plant is generated in accordance with information acquired from the facility and a sensor, the problem as below can arise. Specifically, it is necessary to acquire information from the facility and the sensor at shorter time intervals to update the management screen image with the state of the facility in a more real-time manner. However, information acquisition from the facility or the sensor at shorter time intervals creates the need for a network for transmitting such information that is faster in speed and wider in bandwidth, and therefore increases operational costs. Conversely, failing to make a network faster and wider to reduce operational costs makes it difficult to update the management screen image with the state of the facility in real time. This makes it impossible to quickly take necessary measures when the state of the facility suddenly changes.

An aspect of the present invention has been made in view of the above problem, and an object thereof is to provide a screen image generation method and a screen image generation device that are for generating a management screen image indicating a state of a facility in a production plant and that both ensure a real-time property of the management screen image needed in actual production plants and reduce required levels of making a network faster in speed and wider in bandwidth.

It is preferable to monitor, in real time, an alert transmitted from a controller incorporated in a facility. That is because failing to quickly take a measure in response to the alert is highly likely to immediately cause a device failure. It is preferable to regularly monitor data (e.g. data representing power consumption of the facility) transmitted from the controller incorporated in the facility and data (data representing a temperature of the facility) transmitted from a sensor accompanying the facility. That is because failing to quickly respond to such kinds of data is unlikely to immediately cause a device failure.

As above, information acquired, from the controller and the sensor, for generating the management screen image is classified into information which is such that failing to acquire the information in real time is highly likely to cause a problem and information which is such that even regular acquisition of the information is less likely to cause a problem. Accordingly, performing regular acquisition of information classified into the latter while performing real-time acquisition of information classified into the former enables both ensuring of a real-time property of the management screen image needed in actual production plants and reductions in required levels of making a network faster in speed and wider in bandwidth. The inventors of the present application have arrived at an aspect of the present invention on the basis of the above consideration.

A screen image generation method in accordance with an aspect of the present invention is defined according to claim 1.

An aspect of the present invention enables both ensuring of a real-time property of a management screen image needed in actual production plants and reductions in required levels of making a network faster in speed and wider in bandwidth.

A screen image generation device according to the invention is defined in claim 3, while a computer program according to the invention is defined in claim 4.

### Description of embodiments

- Fig. 1: is a block diagram illustrating a configuration of a management system in accordance with an embodiment of the present invention.
- Fig. 2: is a block diagram illustrating a configuration of a server of the management system in Fig. 1.
- Fig. 3: is a flowchart illustrating a processing flow in a screen image generation method performed by the server in Fig. 2.
- Fig. 4: is a sequence diagram illustrating a data flow in the screen image generation method illustrated in Fig. 3.
- Fig. 5: is a screen configuration diagram illustrating a specific example of a management screen image generated by the screen image generation method illustrated in Fig. 3.

### (Configuration of management system)

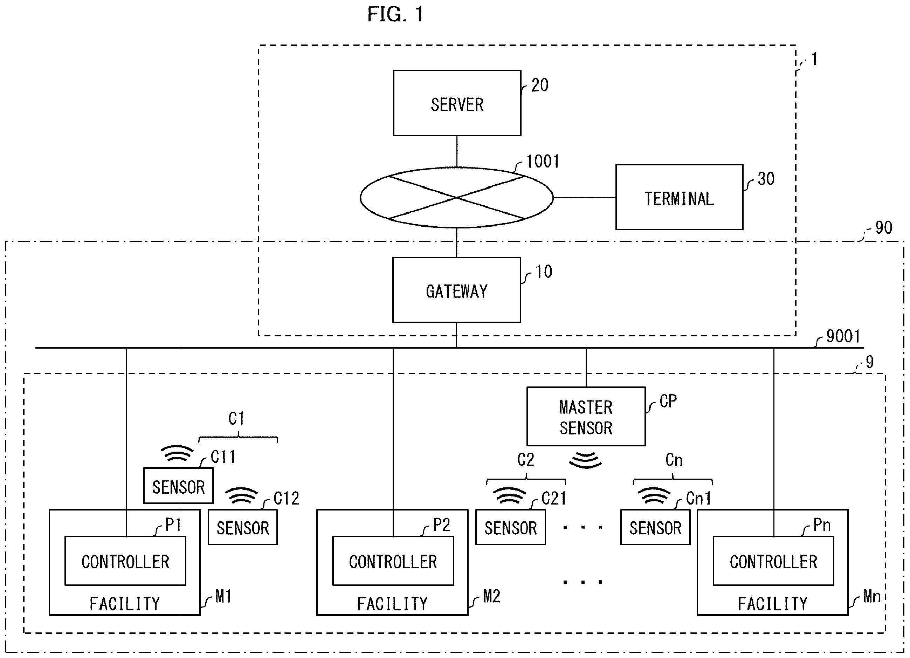

The following description will discuss a configuration of a management system 1 in accordance with an embodiment of the present invention with reference to Fig. 1. Fig. 1 is a block diagram illustrating a configuration of the management system 1.

A management system 1 is a system for managing a production line 9, and includes: a gateway 10; a server 20 (an example of the "screen image generation device" in the claims); and a terminal 30, as illustrated in Fig. 1.

The production line 9 includes n facilities M1 to Mn (n is a natural number not less than 1) installed in a production plant 90. Each facility Mi (i is a natural number not less than 1 and not more than n) incorporates a controller Pi. The controller Pi has functions of (1) identifying an internal state of the facility Mi and generating data representing the identified state, and (2) generating, in accordance with the identified state, an alert concerning the facility Mi. Further, a sensor group Ci accompanies each facility Mi. Each sensor group Ci has a function of detecting an external state of the facility Mi and generating a signal representing the detected state. Inside the production plant 90, a master sensor CP is also installed. The master sensor CP is connected to each sensor group Ci via a wireless sensor network. The master sensor CP has a function of acquiring, from each sensor group Ci accompanying a corresponding facility Mi, the signal representing the external state of the corresponding facility Mi, and generating data representing the external state of the corresponding facility Mi. The configuration of the production line 9 will be described in detail in another section.

The gateway 10, disposed inside the production plant 90, is connected to facilities M1 to Mn and to the master sensor CP via a LAN 9001. The gateway 10 acquires, from each controller Pi incorporated in a corresponding facility Mi, data representing an internal state of the corresponding facility Mi and an alert concerning the corresponding facility Mi. The gateway 10 also acquires, from the master sensor CP, data representing an external state of each facility Mi. The server 20, disposed outside the production plant 90, is connected to the gateway 10 via a wide area network (WAN) 1001. The server 20 acquires, from the gateway 10, the data representing the external state of, the data representing the internal state of, and the alert concerning each facility Mi. Further, the server 20 generates a management screen image G for managing the production line 9, in accordance with the data and alert concerning each facility Mi.

The terminal 30, disposed at any place inside or outside the production plant 90, is connected to the server 20 via the WAN 1001. The terminal 30 acquires the management screen image G from the server 20, and displays the management screen image G acquired. The configuration of the server 20 and a specific example of the management screen image G will be described in detail in another section.

For example, the terminal 30 may be a notebook computer, a smartphone, a tablet, or the like carried by a person in charge of the maintenance of each facility Mi. Alternatively, the terminal 30 may be installed in a support center responsible for the maintenance of the production line 9. Alternatively, the terminal 30 may be installed in the production plant 90 so that a person on-site responsible for the production line 9 can use the terminal 30. Although illustrated in Fig. 1 is an example in which the management system 1 includes a single terminal 30, the management system 1 may include a plurality of terminals 30. Optionally, for example, one or more of the plurality of terminals 30 are carried by the above-described person in charge, any other one or more are installed in the above-described support center, and any other one or more are installed in the production plant 90.

### (Details of production line)

The following description will discuss the details of the production line 9 with reference again to Fig. 1. The production line 9 include: the n facilities M1 to Mn; the n sensor groups C1 to Cn; and a master sensor CP, as described above. In the present embodiment, it is assumed that the production line 9 is for producing castings, although the present invention is not limited thereto.

Each facility Mi incorporates the controller Pi. Examples of the facility Mi include, but not limited to, a molding machine, a blasting device, and a dust collector.

Each controller Pi controls the corresponding facility Mi. The controller Pi is, for example, a programmable logic controller (PLC) that operates according to a program for controlling each section of the facility Mi. Each controller Pi identifies an internal state of the corresponding facility Mi and generates data representing the identified state. Each controller Pi also generates, in accordance with the identified state, an alert concerning the corresponding facility Mi. Examples of the internal state include an operational state, power consumption, operating time, the number of inspections of a predetermined component, a date of replacement of a predetermined component, and a time required for a predetermined work. However, the internal state is not limited thereto. Examples of the alert include an anomaly alert indicating an anomaly in the facility Mi or a predetermined component and a warning alert indicating that an anomaly in the facility Mi or a predetermined component is highly likely. However, the alert concerning the facility Mi is not limited thereto. The identification, by the controller Pi, of the internal state of the facility Mi is implemented through reference to, for example, a signal outputted from a sensor incorporated in the facility Mi and/or a parameter (e.g., a setting value for defining the operation of the facility Mi) stored in a memory incorporated in the facility Mi. Each controller Pi is connected to the gateway 10 (described later) via the local area network (LAN) 9001 set up in the production plant 90. The LAN 9001 is made up of, for example, a wired LAN, a wireless LAN, or a combination thereof. In response to a request from the gateway 10 or spontaneously, each controller Pi transmits, to the gateway 10, data representing the internal state of the corresponding facility and an alert concerning the corresponding facility Mi. The data transmitted by the controller Pi to the gateway 10 at each transmission timing may be data generated immediately before the current transmission timing, or may be a chronologically-arranged data series generated from the last transmission timing to the current transmission timing. The same applies to the alert transmitted by the controller Pi to the gateway at each transmission timing. The communications between the controller Pi and the gateway 10 may be implemented by a LAN connection as described herein or by a serial connection. Each sensor group Ci includes mi sensors Ci1 to Cimi (mi is a natural number not less than 1) accompanying the facility Mi. As used herein, the word "accompanying" means retrofitting the facility Mi to detect the external state of the facility Mi. Each sensor Cij (j is a natural number not less than 1 and not more than mi) can be installed inside or outside the facility Mi. In the example in Fig. 1, the facility M1 is accompanied by two sensors C11 and C12. The facility M2 is accompanied by a sensor C21. The facility Mn is accompanied by a sensor Cm1.

Each sensor Cij detects an external state of the facility Mi and generates a signal representing the detected state. Examples of the external state include vibration of the facility Mi and temperature of the facility Mi. The vibration of the facility Mi can be at least any of displacement, velocity, and acceleration of the vibration. The examples also include a pressure difference between two rooms (for example, a clean room and a dirty room in a dust collector) in the facility Mi. The examples also include an electric current in an electronic component (for example, a motor for driving a component to rotate) incorporated in the facility Mi. The examples also include working oil dirtiness in the facility Mi. The examples also include the temperature of molten metal put into the facility Mi. However, the external state is not limited thereto. Examples of the sensor Cij include, but not limited to, a vibration sensor, a current transformer (CT) sensor, a manometer, an oil quality sensor, a non-contact temperature sensor, and can be any analog sensor (typically having an output of 4 mA to 20 mA).

Each sensor Cij is communicatively connected to the master sensor CP. For example, each sensor Cij is communicatively connected to the master sensor CP via the wireless sensor network. The wireless sensor network is formed by, for example, short-range radio communication such as infrared communication or Bluetooth (registered trademark), or the like. Further, communication of signals between the master sensor CP and each sensor Cij is made according to a predetermined protocol. Any sensor can be easily added by retrofit as a sensor accompanying any facility Mi, provided that the sensor (i) includes a communications interface for connection with the wireless sensor network to which the master sensor CP is connected and (ii) communicates information according to the protocol with which the master sensor CP is compliant.

Each sensor Cij may be configured to periodically transmit, to the master sensor CP, a signal, detected by the sensor Cij, representing an external state of the facility Mi. Alternatively, each sensor Cij may be configured to transmit, to the master sensor CP, the detected signal representing the external state, at the time when the detected external state meets a predetermined requirement. Alternatively, each sensor Cij may be configured to transmit, to the master sensor CP, the detected signal representing the external state, at the time of receiving a request from the master sensor CP.

The master sensor CP receives, from each sensor Cij, the signal representing the external state of the facility Mi. A timing for the master sensor CP receiving the signal from each sensor Cij depends on the configuration of the sensor Cij. The master sensor CP generates data representing the external state of each facility Mi, from a signal received from each of the sensors Ci1 to Cimi accompanying the facility Mi. The master sensor CP then stores, in a memory (not illustrated) of the master sensor CP, the data representing the external state of each facility Mi, in association with the identification information of the facility Mi. Associating the data representing the external state of the facility Mi with the facility Mi may be performed in the master sensor CP as described here, in the gateway 10, or in the server 20.

The master sensor CP is also connected to the gateway 10 via the LAN 9001. The master sensor CP reads from the memory and transmits to the gateway 10, information representing the external state of each facility Mi, in response to a request from the gateway 10 or spontaneously. The data transmitted by the master sensor CP to the gateway 10 at each transmission timing may be data generated immediately before the current transmission timing, or may be a chronologically-arranged data series generated from the last transmission timing to the current transmission timing.

Although the production line 9 includes a single master sensor CP in the present embodiment, the production line 9 may include a plurality of master sensors each having the same configuration that the master sensor CP has. In that case, each sensor Cij is connected to any of the plurality of master sensors. At least one and at least another one of the plurality of master sensors may be connected to respective wireless sensor networks different from each other. At least one and at least another one of the plurality of master sensors may use respective protocols different from each other to communicate with each sensor Cij.

### (Configuration of server 20)

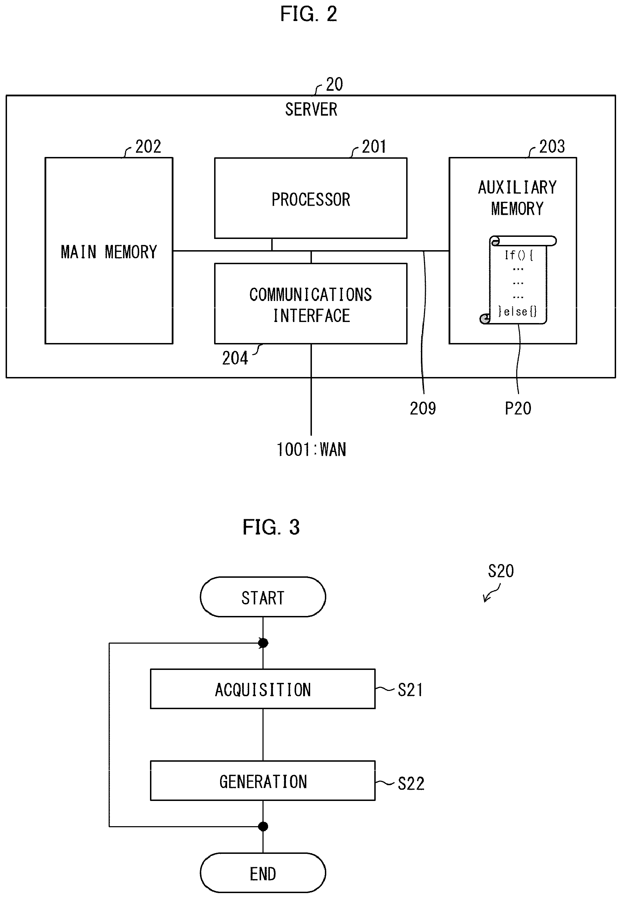

The following description will discuss the server 20 in detail with reference to Fig. 2. Fig. 2 is a block diagram illustrating a hardware configuration of the server 20.

The server 20 is formed by a computer including: a processor 201; a main memory 202; an auxiliary memory 203; and a communications interface 204, as illustrated in Fig. 2. The main memory 202 and the auxiliary memory 203 are examples, in the present invention, of a memory included in the server. The communications interface 204 is an example, in the present invention, of a communications interface included in the server.

The processor 201, the main memory 202, the auxiliary memory 203, and the communications interface 204 are connected to each other via a bus 209. Examples of the processor 201 include one or more microprocessors, one or more digital signal processors, one or more microcontrollers, and a combination thereof. Examples of the main memory 202 include one or more semiconductor RAMs. Examples of the auxiliary memory 203 include one or more HDDs, one or more SSDs, and a combination thereof. The auxiliary memory 203 may be partially or wholly online storage connected via the communications interface 204. The communications interface 204 is connected to the WAN 1001.

The auxiliary memory 203 stores a program P20 for causing the processor 201 to perform a screen image generation method S20 in the server 20 (described later). The processor 201 loads, on the main memory 202, the program P20 stored in the auxiliary memory 203, and performs each instruction included in the program P20 having been loaded. In this manner, the processor 201 performs each step included in the screen image generation method S20. The auxiliary memory 203 also stores various kinds of data to which the processor 201 refers to perform the screen image generation method S20.

The communications interface 204 is for communicating with the gateway 10 and the terminal 30 via the WAN 1001. Examples of the communications interface 204 include an Ethernet (registered trademark) interface.

Although the processor 201 performs the screen image generation method S20 according to the program P20 stored in the auxiliary memory 203, which is an internal storage medium, in this description, the present embodiment is not limited thereto. Specifically, the processor 201 may perform the screen image generation method S20 according to the program P20 stored in an external storage medium. In this case, a computer-readable "non-transitory tangible medium" such as a tape, a disk, a card, a semiconductor memory, or a programmable logic circuit can be used as the external storage medium. Alternatively, the processor 201 may perform the screen image generation method S20 according to the program P20 obtained over a network to which the processor 201 is connected via the communications interface 204.

Although a single computer implements the functions of the server 20 in this description, the present embodiment is not limited thereto. Specifically, a plurality of computers configured to be able to communicate with each other may implement the functions of the server 20. This allows these computers to perform the respective steps of the screen image generation method S20 in parallel.

### (Flow of screen image generation method)

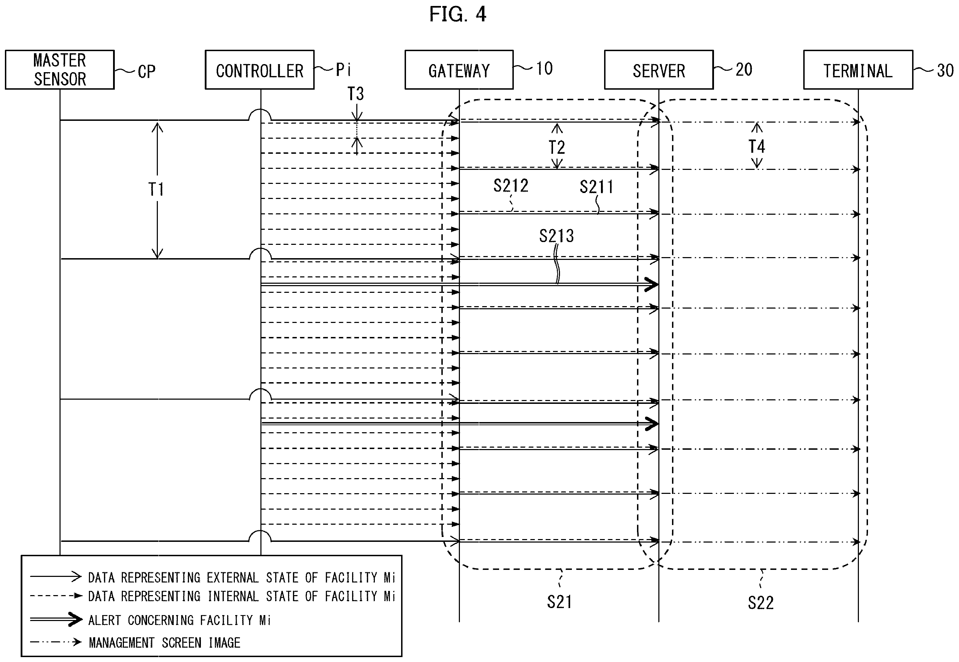

The following description will discuss the flow illustrating the screen image generation method S20 performed by the server 20, with reference to Figs. 3 and 4. Fig. 3 is a flowchart illustrating a processing flow in the screen image generation method S20. Fig. 4 is a sequence diagram illustrating a data flow in the screen image generation method S20.

The screen image generation method S20 includes: acquisition S21; and generation S22, as illustrated in Fig. 3. The acquisition S21 is processing of acquiring, by the processor 201, data and an alert concerning each facility Mi. The generation S22 is processing of generating, by the processor 201, the management screen image G indicating a state of the facility Mi, in accordance with the data and the alert acquired in the acquisition S21. The management screen image G generated in the generation S22 is transmitted to the terminal 30.

The acquisition S21 performed by the processor 201 includes: first acquisition S211; second acquisition S212; and third acquisition S213, as illustrated in Fig. 4.

The first acquisition S211 is processing of regularly acquiring, by the processor 201 from the gateway 10, data (an example of the "first data" in the claims) transmitted from the sensor Cij accompanying the facility Mi and representing an external state of the facility Mi. The master sensor CP regularly transmits, to the gateway 10, the data representing an external state the facility Mi at intervals of a first time T1. Meanwhile, the first acquisition S211 is regularly performed at intervals of a second time T2 shorter than the first time T1. For example, the first time T1 is 10 minutes, and the second time T2 is not more than 10 minutes. This enables updating, at a necessary and sufficient frequency, of the external state to be displayed in the management screen image G.

The second acquisition S212 is processing of regularly acquiring, by the processor 201 from the gateway 10, data (an example of the "second data" in the claims) transmitted from the controller Pi incorporated in the facility Mi and representing an internal state of the facility Mi. The controller Pi transmits, to the gateway 10, the data representing an internal state of the facility Mi, irregularly, or regularly at intervals of a third time T3 shorter than the second time T2. In Fig. 4, the latter case is illustrated. Meanwhile, the second acquisition S212 is regularly performed at intervals of the second time T2, as is the first acquisition S211. Data acquired by the processor 201 in the second acquisition S212 is the data accumulated in the gateway 10 during the second time T2 and representing the internal states of the facility Mi. This enables updating, at a necessary and sufficient frequency, of the internal state to be displayed in the management screen image G. The second acquisition S212 may be performed concurrently with the first acquisition S211. This enables a reduction in the number of times of connection between the gateway 10 and the server 20, in comparison with a case of not being performed concurrently, and consequently enables communication cost reduction.

The third acquisition S213 is processing of acquiring, by the processor 201 from the gateway 10, an alert (an example of the "alert" in the claims) irregularly transmitted from the controller Pi incorporated in the facility Mi and concerning the facility Mi. The third acquisition S213 is performed in real time, at the time of receiving, by the gateway 10, an alert from the controller Pi. The timing for transmitting, by the controller Pi, an alert to the gateway 10 may coincide with any of the timings for transmitting, by the controller Pi, data representing an internal state of the facility Mi to the gateway 10.

The generation S22 is repeatedly performed at intervals of a fourth time T4 equal to or shorter than the second time T2. In Fig. 4, a case where the fourth time T4 is equal to the second time T2 is illustrated.

As above, the master sensor CP regularly transmits data representing an external state of the facility Mi, to the gateway 10 at intervals of the first time T1. In this case, data transmitted by the master sensor CP to the gateway 10 at each transmission timing is data chronologically representing external states of the facility Mi detected from the last transmission timing to the current transmission timing.

As above, the controller Pi incorporated in the facility Mi irregularly transmits, to the gateway 10, data representing an internal state of the facility Mi. In this case, the timing for data transmission by the controller Pi is, for example, the time when the internal state changes. In this case, data transmitted by the controller Pi to the gateway 10 at each transmission timing is data representing an internal state having changed. Alternatively, the controller Pi incorporated in the facility Mi regularly transmits data representing an internal state of the facility Mi, to the gateway 10 at intervals of the third time T3, as described above. In this case, data transmitted by the controller Pi to the gateway 10 at each transmission timing is data chronologically representing internal states of the facility Mi detected between the last transmission timing and the current transmission timing.

Additionally, the controller Pi incorporated in the facility Mi irregularly transmits, for example, an alert concerning the facility Mi, to the gateway 10. In this case, the timing for alert transmission by the controller Pi is, for example, a time when the internal state of the facility Mi changes. In this case, an alert transmitted by the controller Pi to the gateway 10 at each transmission timing is an alert generated in accordance with the internal state having changed.

### (Specific example of management screen image)

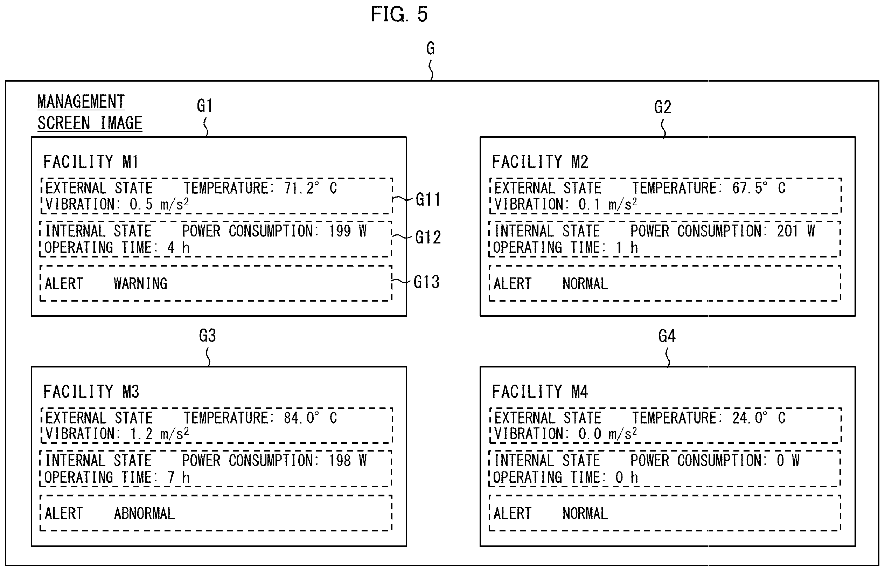

The following description will discuss a specific example of the management screen image G generated by the server 20 and displayed by the terminal 30, with reference to Fig. 5. Fig. 5 is a screen configuration diagram illustrating a specific example of the management screen image G. The management screen image G in accordance with the present specific example is a management screen image simultaneously indicating the states of the four facilities M1 to M4.

The management screen image G includes: a first display region G1; a second display region G2; a third display region G3; and a fourth display region G4, as illustrated in Fig. 5.

The first display region G1 is a display region for indicating states of the first facility M1. The second display region G2 is a display region for indicating states of the second facility M2. The third display region G3 is a display region for indicating states of the third facility M3. The fourth display region G4 is a display region for indicating states of the fourth facility M4. These four display regions G1 to G4 have the same configuration. The following description will therefore discuss the first display region G1, and the descriptions of the other display regions G2 to G4 are omitted.

The first display region G1 includes: an external state display region G11; an internal state display region G12; and an alert display region G13, as illustrated in Fig. 5.

The external state display region G11 is a region for displaying an external state of the facility M1 represented by the data acquired in the first acquisition S211 above. The external state display region G11 illustrated in Fig. 5 displays the temperature and vibration (more specifically, an acceleration of the vibration) of the facility M1 as the external state.

The internal state display region G12 is a region for displaying an internal state of the facility M1 represented by the data acquired in the second acquisition S212 above. The internal state display region G12 illustrated in Fig. 5 displays power consumption and operating time of the facility M1 as the internal state.

The alert display region G13 is a region for displaying an alert concerning the facility M1 acquired in the third acquisition S213 above. The alert display region G13 illustrated in Fig. 5 displays a warning alert (a character string of "WARNING") as the alert concerning the facility M1. When no alert concerning the facility M1 is acquired in the third acquisition S213, a character string of, for example, "NORMAL" is displayed in the alert display region G13.

According to the screen image generation method S20 and the server 20 in accordance with the present embodiment, the processor 201 performs the first acquisition S211, the second acquisition S212, the third acquisition S213, and the generation S22. This enables both real-time acquisition of an alert transmitted from the controller Pi incorporated in the facility Mi and regular acquisition, at intervals of the second time T2, of data transmitted from the sensor Cij accompanying the facility Mi and the controller Pi incorporated in the facility Mi. It is therefore possible to both ensure a real-time property of the management screen image G needed when the production plant 90 actually operates and reduce required levels of making a network faster in speed and wider in bandwidth.

Data acquired by the processor 201 in the second acquisition S212 is the data accumulated in the gateway 10 during the second time T2. This enables a reduction in the frequency of communication with the gateway 10, compared with a case of real-time acquisition of data transmitted from the controller Pi irregularly or regularly.

The generation S22 is repeatedly performed at intervals of the fourth time T4 equal to or shorter than the second time T2. This enables a further improvement in a real-time property of the management screen image G generated.

In the first acquisition S211 and the second acquisition S212, data indicating a temperature or a vibration of the facility Mi and an operational state of the facility Mi is acquired. This enables generation of the management screen image G that reflects the temperature or vibration and the operational state of the facility Mi.

### Reference numerals

- 1:: Management system
- 10:: Gateway
- 20:: Server (management screen image generation device)
- 201:: Processor
- 202:: Main memory
- 203:: Auxiliary memory
- 204:: Communications interface
- 30:: Terminal
- 90:: Production plant
- 9:: Production line
- Mi:: Facility
- Pi:: Controller
- CP:: Master sensor
- Ci:: Sensor group

## Claims

1. A screen image generation method (S20) for generating a management screen image (G) indicating a state of a facility (M1, M2, M3, M4, Mn) in a production plant (90), the method comprising:
- first acquisition (S211) of acquiring first data concerning the facility (M1, M2, M3, M4, Mn) and transmitted from a sensor (C11, C12, C21, Cn1) accompanying the facility (M1, M2, M3, M4, Mn) ;
- second acquisition (S212) of acquiring second data concerning the facility (M1, M2, M3, M4, Mn) and transmitted from a controller (P1, P2, Pn) incorporated in the facility (M1, M2, M3, M4, Mn) ;
- third acquisition (S213) of acquiring, in real time, an alert concerning the facility (M1, M2, M3, M4, Mn) irregularly transmitted from the controller (P1, P2, Pn) incorporated in the facility (M1, M2, M3, M4, Mn) ; and
- generating (S22) a management screen image (G) indicating the state of the facility (M1, M2, M3, M4, Mn) in accordance with the first data, the second data, and the alert;
wherein
- the first acquisition, the second acquisition, the third acquisition, and the generating the management screen (G) image are performed by one or more processors (201) via a gateway (10) disposed inside the production plant (90), the one or more processors (201) being included in a server (20),
- a master sensor (CP) connected to the sensor (C11, C12, C21, Cn1) regularly transmits the first data to the gateway (10) at intervals of a first time (T1),
- the one or more processors (201) regularly acquires the first data from the gateway (10) at intervals of a second time (T2) shorter than the first time (T1) in the first acquisition,
- the controller (P1, P2, Pn) transmits, to the gateway (10), the second data irregularly, or regularly at intervals of a third time (T3) shorter than the second time (T2),
- the one or more processors (201) regularly acquires, from the gateway (10), the second data accumulated in the gateway (10) at intervals of the second time (T2) in the second acquisition processing, and
- the one or more processors (201) keeps updated the state of the facility (M1, M2, M3, M4, Mn) indicated in the management screen image by repeatedly performing the generation at intervals of a fourth time (T4) equal to or shorter than the second time (T2).

2. The screen image generation method (S20) according to claim 1, wherein the first data indicates a temperature or a vibration of the facility, and the second data indicates an operational state of the facility.

3. A screen image generation device (20) for generating a management screen image (G) indicating a state of a facility (M1, M2, M3, M4, Mn) in a production plant (90), the screen image generation device (20) comprising one or more processors (201),
wherein the one or more processors (201) is configured to perform
- first acquisition (S211) of acquiring first data concerning the facility (M1, M2, M3, M4, Mn) and transmitted from a sensor (C11, C12, C21, Cn1) accompanying the facility (M1, M2, M3, M4, Mn) via a gateway (10) disposed inside the production plant (90),
- second acquisition (S212) of acquiring second data concerning the facility (M1, M2, M3, M4, Mn) and transmitted from a controller (P1, P2, Pn) incorporated in the facility (M1, M2, M3, M4, Mn) via the gateway (10),
- third acquisition (S213) of acquiring, in real time, an alert concerning the facility (M1, M2, M3, M4, Mn) irregularly transmitted from the controller (P1, P2, Pn) incorporated in the facility (M1, M2, M3, M4, Mn) via the gateway (10), and
- generating (S22) a management screen image (G) indicating the state of the facility (M1, M2, M3, M4, Mn) in accordance with the first data, the second data, and the alert,
wherein the one or more processors (201) is further configured to perform
- regularly acquiring the first data from the gateway (10) at intervals of a second time (T2) shorter than a first time (T1) in the first acquisition, the first data being regularly transmitted from a master sensor (CP) connected to the sensor (C11, C12, C21, Cn1) to the gateway (10) at intervals of the first time (T1);
- regularly acquiring the second data from the gateway (10) at intervals of the second time (T2) in the second acquisition processing, the second data being accumulated in the gateway (10), the second data being irregularly transmitted from a controller (P1, P2, Pn) to the gateway (10) or the second data being regularly transmitted from the controller (P1, P2, Pn) to the gateway (10) at intervals of a third time (T3) shorter than the second time (T2);
wherein the one or more processors (201) is configured to keep updated the state of the facility (M1, M2, M3, M4, Mn) indicated in the management screen image (G) by repeatedly performing the generation at intervals of a fourth time (T4) equal to or shorter than the second time (T2).

4. A program (P20) for causing a computer to operate as a screen image generation device (20) according to claim 3, the program (P20) comprising instructions that, when executed by one or more processors (201) of the computer, cause the computer to carry out the steps of method claims 1 or 2.

## Patentansprüche

1. Bildschirmbild-Erzeugungsverfahren (S20) zum Erzeugen eines Management-Bildschirmbildes (G), welches einen Zustand einer Einrichtung (M1, M2, M3, M4, Mn) in einer Produktionsstätte (90) angibt, wobei das Verfahren Folgendes umfasst:
- eine erste Erfassung (S211) des Erfassens erster Daten, welche die Einrichtung (M1, M2, M3, M4, Mn) betreffen und von einem Sensor (C11, C12, C21, Cn1), der zu der Einrichtung (M1, M2, M3, M4, Mn) gehört, gesendet werden;
- eine zweite Erfassung (S212) des Erfassens zweiter Daten, welche die Einrichtung (M1, M2, M3, M4, Mn) betreffen und von einem Controller (P1, P2, Pn), der in die Einrichtung (M1, M2, M3, M4, Mn) integriert ist, gesendet werden;
- eine dritte Erfassung (S213) des Erfassens, in Echtzeit, eines Alarms, welcher die Einrichtung (M1, M2, M3, M4, Mn) betrifft, der unregelmäßig von dem Controller (P1, P2, Pn), der in die Einrichtung (M1, M2, M3, M4, Mn) integriert ist, gesendet wird; und
- Erzeugen (S22) eines Management-Bildschirmbildes (G), welches den Zustand der Einrichtung (M1, M2, M3, M4, Mn) angibt, in Übereinstimmung mit den ersten Daten, den zweiten Daten und dem Alarm;
wobei
- die erste Erfassung, die zweite Erfassung, die dritte Erfassung und das Erzeugen des Management-Bildschirmbildes (G) durch einen oder mehrere Prozessoren (201) über ein Gateway (10), das im Inneren der Produktionsstätte (90) angeordnet ist, durchgeführt werden, wobei der eine oder die mehreren Prozessoren (201) in einem Server (20) enthalten sind,
- ein Mastersensor (CP), welcher mit dem Sensor (C11, C12, C21, Cn1) verbunden ist, die ersten Daten regelmäßig in Intervallen einer ersten Zeit (T1) an das Gateway (10) sendet,
- der eine oder die mehreren Prozessoren (201) die ersten Daten bei der ersten Erfassung regelmäßig in Intervallen einer zweiten Zeit (T2), die kürzer als die erste Zeit (T1) ist, von dem Gateway (10) erfassen,
- der Controller (P1, P2, Pn) die zweiten Daten unregelmäßig oder regelmäßig in Intervallen einer dritten Zeit (T3), die kürzer als die zweite Zeit (T2) ist, an das Gateway (10) übermittelt,
- der eine oder die mehreren Prozessoren (201) die zweiten Daten, die in dem Gateway gesammelt werden, bei der zweiten Erfassungsverarbeitung regelmäßig in Intervallen der zweiten Zeit (T2) von dem Gateway (10) erfassen, und
- der eine oder die mehreren Prozessoren (201) den Zustand der Einrichtung (M1, M2, M3, M4, Mn), der in dem Management-Bildschirmbild angegeben wird, durch wiederholtes Durchführen der Erzeugung in Intervallen einer vierten Zeit (T4), die gleich der oder kürzer als die zweite Zeit (T2) ist, aktualisiert halten.

2. Bildschirmbild-Erzeugungsverfahren (S20) nach Anspruch 1, wobei die ersten Daten eine Temperatur oder eine Vibration der Einrichtung angeben und die zweiten Daten einen Betriebszustand der Einrichtung angeben.

3. Bildschirmbild-Erzeugungsvorrichtung (20) zum Erzeugen eines Management-Bildschirmbildes (G), welches einen Zustand einer Einrichtung (M1, M2, M3, M4, Mn) in einer Produktionsstätte (90) angibt, wobei die Bildschirmbild-Erzeugungsvorrichtung (20) einen oder mehrere Prozessoren (201) umfasst,
wobei der eine oder die mehreren Prozessoren (201) zum Durchführen des Folgenden konfiguriert sind
- eine erste Erfassung (S211) des Erfassens erster Daten, welche die Einrichtung (M1, M2, M3, M4, Mn) betreffen und über ein Gateway (10), das im Inneren der Produktionsstätte (90) angeordnet ist, von einem Sensor (C11, C12, C21, Cn1), der zu der Einrichtung (M1, M2, M3, M4, Mn) gehört, gesendet werden,
- eine zweite Erfassung (S212) des Erfassens zweiter Daten, welche die Einrichtung (M1, M2, M3, M4, Mn) betreffen und über das Gateway (10) von einem Controller (P1, P2, Pn), der in die Einrichtung (M1, M2, M3, M4, Mn) integriert ist, gesendet werden,
- eine dritte Erfassung (S213) des Erfassens, in Echtzeit, eines Alarms, welcher die Einrichtung (M1, M2, M3, M4, Mn) betrifft, der über das Gateway (10) unregelmäßig von dem Controller (P1, P2, Pn), der in die Einrichtung (M1, M2, M3, M4, Mn) integriert ist, gesendet wird, und
- Erzeugen (S22) eines Management-Bildschirmbildes (G), welches den Zustand der Einrichtung (M1, M2, M3, M4, Mn) angibt, in Übereinstimmung mit den ersten Daten, den zweiten Daten und dem Alarm,
wobei der eine oder die mehreren Prozessoren (201) ferner zum Durchführen des Folgenden konfiguriert sind
- regelmäßiges Erfassen der ersten Daten von dem Gateway (10) in Intervallen einer zweiten Zeit (T2), die kürzer als eine erste Zeit (T1) ist, bei der ersten Erfassung, wobei die ersten Daten regelmäßig in Intervallen der ersten Zeit (T1) von einem Mastersensor (CP), der mit dem Sensor (C11, C12, C21, Cn1) verbunden ist, an das Gateway (10) gesendet werden;
- regelmäßiges Erfassen der zweiten Daten von dem Gateway (10) in Intervallen der zweiten Zeit (T2) bei der zweiten Erfassungsverarbeitung, wobei die zweiten Daten in dem Gateway (10) gesammelt werden, wobei die zweiten Daten unregelmäßig von einem Controller (P1, P2, Pn) an das Gateway (10) gesendet werden oder die zweiten Daten regelmäßig in Intervallen einer dritten Zeit (T3), die kürzer als die zweite Zeit (T2) ist, von dem Controller (P1, P2, Pn) an das Gateway (10) gesendet werden;
wobei der eine oder die mehreren Prozessoren (201) dazu konfiguriert sind, den Zustand der Einrichtung (M1, M2, M3, M4, Mn), der in dem Management-Bildschirmbild (G) angegeben wird, durch wiederholtes Durchführen der Erzeugung in Intervallen einer vierten Zeit (T4), die gleich der oder kürzer als die zweite Zeit (T2) ist, auf dem neuesten Stand zu halten.

4. Programm (P20) zum Veranlassen, dass ein Computer als eine Bildschirmbild-Erzeugungsvorrichtung (20) nach Anspruch 3 arbeitet, umfassend Anweisungen, die, wenn sie durch einen oder mehrere Prozessoren (201) des Computers ausgeführt werden, den Computer zum Ausführen der Schritte der Verfahrensansprüche 1 oder 2 veranlassen.

## Revendications

1. Procédé de génération d'image d'écran (S20) pour la génération d'une image d'écran de gestion (G) indiquant un état d'une installation (M1, M2, M3, M4, Mn) dans une usine de production (90), le procédé comprenant :
- une première acquisition (S211) consistant à acquérir des premières données concernant l'installation (M1, M2, M3, M4, Mn) et transmises à partir d'un capteur (C11, C12, C21, Cn1) accompagnant l'installation (M1, M2, M3, M4, Mn) ;
- une deuxième acquisition (S212) consistant à acquérir des deuxièmes données concernant l'installation (M1, M2, M3, M4, Mn) et transmises à partir d'un contrôleur (P1, P2, Pn) incorporé dans l'installation (M1, M2, M3, M4, Mn) ;
- une troisième acquisition (S213) consistant à acquérir, en temps réel, une alerte concernant l'installation (M1, M2, M3, M4, Mn) transmise de façon irrégulière à partir du contrôleur (P1, P2, Pn) incorporé dans l'installation (M1, M2, M3, M4, Mn) ; et
- la génération (S22) d'une image d'écran de gestion (G) indiquant l'état de l'installation (M1, M2, M3, M4, Mn) en fonction des premières données, des deuxièmes données et de l'alerte ;
dans lequel
- la première acquisition, la deuxième acquisition, la troisième acquisition et la génération de l'image d'écran de gestion (G) sont effectuées par un ou plusieurs processeurs (201) par le biais d'une passerelle (10) disposée à l'intérieur de l'usine de production (90), les un ou plusieurs processeurs (201) étant inclus dans un serveur (20),
- un capteur maître (CP) connecté au capteur (C11, C12, C21, Cn1) transmet de façon régulière les premières données à la passerelle (10) selon des intervalles d'une première durée (T1),
- les un ou plusieurs processeurs (201) acquièrent de façon régulière les premières données à partir de la passerelle (10) selon des intervalles d'une deuxième durée (T2) inférieure à la première durée (T1) dans la première acquisition,
- le contrôleur (P1, P2, Pn) transmet, à la passerelle (10), les deuxièmes données de façon irrégulière, ou de façon régulière selon des intervalles d'une troisième durée (T3) inférieure à la deuxième durée (T2),
- les un ou plusieurs processeurs (201) acquièrent de façon régulière, à partir de la passerelle (10), les deuxièmes données cumulées dans la passerelle (10) selon des intervalles de la deuxième durée (T2) dans le traitement de la deuxième acquisition, et
- les un ou plusieurs processeurs (201) maintiennent à jour l'état de l'installation (M1, M2, M3, M4, Mn) indiqué dans l'image d'écran de gestion par exécution répétée de la génération selon des intervalles d'une quatrième durée (T4) égale ou inférieure à la deuxième durée (T2).

2. Procédé de génération d'image d'écran (S20) selon la revendication 1, dans lequel les premières données indiquent une température ou une vibration de l'installation, et les deuxièmes données indiquent un état de fonctionnement de l'installation.

3. Dispositif de génération d'image d'écran (20) pour la génération d'une image d'écran de gestion (G) indiquant un état d'une installation (M1, M2, M3, M4, Mn) dans une usine de production (90), le dispositif de génération d'image d'écran (20) comprenant un ou plusieurs processeurs (201), dans lequel les un ou plusieurs processeurs (201) sont configurés pour exécuter
- une première acquisition (S211) consistant à acquérir des premières données concernant l'installation (M1, M2, M3, M4, Mn) et transmises à partir d'un capteur (C11, C12, C21, Cn1) accompagnant l'installation (M1, M2, M3, M4, Mn) par le biais d'une passerelle (10) disposée à l'intérieur de l'usine de production (90),
- une deuxième acquisition (S212) consistant à acquérir des deuxièmes données concernant l'installation (M1, M2, M3, M4, Mn) et transmises à partir d'un contrôleur (P1, P2, Pn) incorporé dans l'installation (M1, M2, M3, M4, Mn) par le biais de la passerelle (10),
- une troisième acquisition (S213) consistant à acquérir, en temps réel, une alerte concernant l'installation (M1, M2, M3, M4, Mn) transmise de façon irrégulière à partir du contrôleur (P1, P2, Pn) incorporé dans l'installation (M1, M2, M3, M4, Mn) par le biais de la passerelle (10), et
- la génération (S22) d'une image d'écran de gestion (G) indiquant l'état de l'installation (M1, M2, M3, M4, Mn) en fonction des premières données, des deuxièmes données et de l'alerte,
dans lequel les un ou plusieurs processeurs (201) sont en outre configurés pour exécuter
- l'acquisition de façon régulière des premières données à partir de la passerelle (10) selon des intervalles d'une deuxième durée (T2) inférieure à une première durée (T1) dans la première acquisition, les premières données étant transmises de façon régulière à partir d'un capteur maître (CP) connecté au capteur (C11, C12, C21, Cn1) à la passerelle (10) selon des intervalles de la première durée (T1) ;
- l'acquisition de façon régulière des deuxièmes données à partir de la passerelle (10) selon des intervalles de la deuxième durée (T2) dans le traitement de la deuxième acquisition, les deuxièmes données étant cumulées dans la passerelle (10), les deuxièmes données étant transmises de façon irrégulière à partir d'un contrôleur (P1, P2, Pn) à la passerelle (10) ou les deuxièmes données étant transmises de façon régulière à partir du contrôleur (P1, P2, Pn) à la passerelle (10) selon des intervalles d'une troisième durée (T3) inférieure à la deuxième durée (T2) ;
dans lequel les un ou plusieurs processeurs (201) sont configurés pour maintenir à jour l'état de l'installation (M1, M2, M3, M4, Mn) indiqué dans l'image d'écran de gestion (G) par exécution répétée de la génération selon des intervalles d'une quatrième durée (T4) égale ou inférieure à la deuxième durée (T2).

4. Programme (P20) destiné à amener un ordinateur à fonctionner comme un dispositif de génération d'image d'écran (20) selon la revendication 3, le programme (P20) comprenant des instructions amenant l'ordinateur à mettre en oeuvre les étapes du procédé selon les revendications 1 ou 2, lorsqu'elles sont exécutées par un ou plusieurs processeurs (201) de l'ordinateur.
